# EUROPEAN PATENT SPECIFICATION

(11) **EP 1 759 595 B1**
(45) Date of publication and mention of the grant of the patent: **05.08.2009**
(21) Application number: 05108080.2
(22) Date of filing: 02.09.2005
(51) Int. Cl.: A23L 1/226, A23L 1/227

(54) **Flavour modulating substance**
Geschmackverstärker
Renforcateur de goût

(43) Date of publication of application: 07.03.2007
(73) Proprietor: Givaudan Nederland Services B.V., 1411 GP Naarden (NL)
(72) Inventor: Noomen, Sylvia N., 2803 DB, Gouda (NL); Renes, Harry, 8241 AS, Lelystad (NL); Winkel, Chris, 1402 GL, Bussum (NL)
(74) Representative: Givaudan Patents

(56) References cited:
- EP-A- 1 310 174
- WO-A-97/04667
- WO-A-20/04075663
- WLOSTOWSKI M ET AL: "Application of 1,1,3,3-tetramethylguanidine in the reaction of amino acids with pantolactone" TETRAHEDRON: ASYMMETRY, ELSEVIER SCIENCE PUBLISHERS, AMSTERDAM, NL, vol. 15, no. 15, 9 August 2004 (2004-08-09), pages 2333-2338, XP004525422 ISSN: 0957-4166
- PERRONE P ET AL: "Nalpha- and N ?-d-galacturonoyl-l-lysine amides: Properties and possible occurrence in plant cell walls" PHYTOCHEMISTRY, PERGAMON PRESS, GB, vol. 49, no. 7, 5 December 1998 (1998-12-05), pages 1879-1890, XP004290288 ISSN: 0031-9422

## Description

### Field of the Invention

The present invention relates to the field of improving the flavour of foodstuffs, beverages, pharmaceutics, tobacco products and oral care products. More particularly, the present invention provides compositions that can be used to confer a fuller and richer taste to foodstuffs, beverages, pharmaceutics, tobacco products and oral care products. The flavour compositions according to the invention are characterised by the presence of one or more flavour modulating substances that are capable of improving and complementing the impact of other flavour imparting substances.

The present invention also encompasses the use of the aforementioned flavour modulating substances for improving the taste of foodstuffs, beverages, pharmaceutics, tobacco products and oral care products, as well as to foodstuffs, beverages, pharmaceutics, tobacco products and oral care products containing these substances.

### Background of the Invention

The flavour of foodstuffs and beverages consists of two parts: the aroma and the taste. In general what is perceived through the olfactory epithelium in the nasal cavity is referred to as 'aroma', whereas the term 'taste' is generally used to describe the sensory impact that is perceived via the mouth, especially the tongue. The flavour sensation experienced upon consumption, especially the taste, provides the final analysis of food prior to ingestion thereof. Visual and olfactory (smell) signals already give a first indication but only after intake of the food into the mouth the final decision is made either to ingest or to reject the food. Sweet taste is usually a signal that the food is safe (appetising) leading to ingestion of the food. The 'reactions' to salt and umami are dependent on the strength of the signal. Bitter and sour are usually experienced as repulsive taste sensations that can lead to rejection. Temperature is another measure by which the food is judged just as well as aching sensations like capsaicin (hot pepper) and certain chemicals (like carbon dioxide).

In short, this means that taste is a very important and very complex system. Until recently most flavour research was focused towards aroma. Especially the last years a series of publications relating to molecules with a (positive) contribution to the taste of foodstuffs has emerged.

Such research has been stimulated significantly by the fact that quite some receptors which are involved in the different taste sensations have been characterized by now (B. Lindemann; Nature 413, 219 (2001)).

Another interesting aspect of taste is that it can have an impact on aroma. It was reported that people having artificially sweetened water in their mouth were significantly more sensitive to the smell of benzaldehyde than people having plain water in their mouth (P. Dalton et al, Nature Neurosci. 3, 431-432 (2000)).

Several screening systems have been described that make it possible to screen, in a short time, large series of molecules for their (modulating) effect on taste response (cf. WO04055048, GB2396414, WO0177292 and US2004/0072254).

Most research on taste modulation so far has been devoted to taste enhancement in savoury products. Several, mainly Japanese, publications describe umami molecules, i.e. alternatives to mono sodium glutamate (MSG) (H Suzuki et al, J Agric Food Chem 50, 313-318 (2002); K Shima et al, J Agric Food Chem 46, 1465-1468 (1998); Y Ueda et al, Biosc Biotech Biochem 61 1977 (1997)).

In EP 1291342, a 'general taste enhancer' is disclosed that was reported to be suitable for enhancing sweetness as well.

WO 97/04667 relates to certain tripeptides as well as to substances that include an N-lactoyl radical and a residue of one of the common amino acids. These so-called N-lactoyl-X type substances, wherein X represents the amino acid residue, are deemed to have the following structural feature in common, R' representing the side chain of one of the 20 proteogenic amino acids:

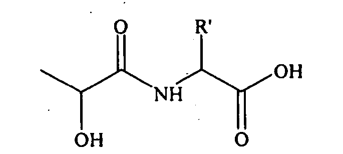

The tripeptides and N-lactoyl-X type substances according to WO 97/04667 were found to constitute useful flavouring ingredients. According to this document these flavouring ingredients are capable of improving the oral perception or mouthfeel of products to which they are added and producing organoleptic effects of the type of that which can be obtained using MSG.

WO04/075663 concerns the use of derivatives of dicarboxylic acids and amino acids as flavouring ingredients, more particularly as mouthfeel and/or umami agents and/or as MSG partial or total replacers. WO 04/075663 teaches the following common structure of these derivatives: 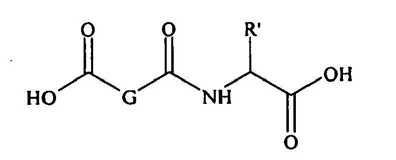 wherein G represents a linear C₁-C₆ alkyl group or a HC=CH group, and R' represents the side chain of one of the 20 proteogenic amino acids.

There is still a need for new so-called flavour modulating substances that provide a positive contribution to the flavour, especially the taste, of foodstuffs, beverages, pharmaceutics, tobacco products and oral care products they are incorporated in. One objective of the present invention is to provide such substances.

### Summary of the Invention

The present inventors have found that substances according to formula (I) and edible salts and esters thereof can be used advantageously to improve the flavour of foodstuffs, beverages, pharmaceutics, tobacco products and oral care products:

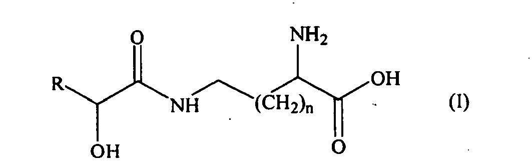

The present flavour modulating substances can advantageously be employed to impart desirable taste attributes in a wide variety of applications and products, especially savoury food applications. In addition, the present flavour modulating substances are capable of modifying the taste and/or aroma impact of other flavour ingredients contained within these same products, thereby improving the overall flavour quality of these products.

The present invention therefore relates to flavour compositions, foodstuffs, beverages, pharmaceutics, tobacco products and oral care products comprising one or more of the substances according to formula (I) and/or edible salts and/or esters thereof.

Other aspects of the present invention relate to the use of the present substance and/or its edible salts and/or esters for improving the taste of foodstuffs, beverages, pharmaceutics, tobacco products and oral care products.

### Detailed Description of the Invention

Accordingly, a first aspect of the present invention relates to flavour compositions comprising, based on the dry weight of the composition, at least 0.001 wt% of one or more flavour modulating substances selected from the group of substances represented by the following formula (I), edible salts thereof and edible esters thereof: 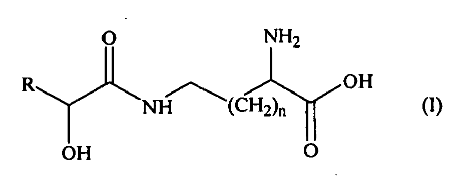 wherein R represents C₁-C₆ alkyl , optionally substituted with one or more substituents selected from hydroxyl, oxo and C₁-C₃ carboxyl, and wherein n is 0, 1, 2 or 3: and at least 0.1 wt.% of one or more of flavouring substances.

The present inventors have found that the flavour modulating substance defined here above and edible salts and esters thereof are very useful ingredients which, particularly in the presence of other flavouring substances, are capable of imparting highly appreciated taste sensations to the products in which they are incorporated, specifically "roundness", "fullness", "substance", "bite" and/or "continuity". Because of this, the present flavour modulating substances can be employed to improve the taste, including "mouthfeel", of foodstuffs, beverages, pharmaceutics, tobacco products and oral care products.

The flavour modulating substance of the present invention as such is capable of imparting highly desirable taste attributes. In addition, it has been found that the flavour modulating substances according to the invention are capable of complementing and modulating the sensory impact of other, flavour imparting, substances contained in the aforementioned products, including complementing and modulating 'salty/savoury' taste impact.

Throughout this document the term "flavour" is used to describe the sensory impact that is perceived via the mouth, especially the tongue, and the olfactory epithelium in the nasal cavity. The term "flavour modulating" as used herein refers to the capability of a composition or substance to alter the taste and/or aroma impact of other, flavour imparting, substances present within the same product, with the proviso that this change in taste impact is not caused by the flavour contribution of said composition or substance *per se*, but instead that it mainly results from the combined effect of on the one hand the flavour modulating composition or substance and on the other hand the other flavour imparting substances. The present substances combine the capability of modulating the taste and/or aroma impact of other, flavour imparting, substances and a taste contribution of their own. The favourable impact of the present flavour modulating substances is believed to be the result of the combination of these two effects.

Because the flavour modulating substances according to the invention are not particularly volatile, they do not produce a strong aroma impact, even though they can affect the aroma impact of other, flavour imparting, substances. Here the term "aroma" refers to the aspect of flavour that is perceived through the olfactory epithelium. Because of the low volatility of the present flavour modulating substances it is believed that the advantageous properties of these substances is somehow associated with the impact that they have on the sensory receptors located within the mouth.

It was found that particularly satisfying results are obtained with substances represented by formula (I), edible salts thereof and/or edible esters thereof, wherein R represents C₁₋C₆ alkyl, each optionally substituted with one or more substituents selected from hydroxyl, oxo and C₁₋C₃ carboxyl.

In an even more preferred embodiment flavour modulating substances are provided as defined herein before wherein R represents C₃₋C₄ alkyl substituted with 3 or 4 substituents selected from hydroxyl and oxo, more preferably C₃-C₄ alkyl wherein each carbon atom is substituted with a substituent selected from hydroxyl and oxo, most preferably butyl wherein each carbon atom is substituted with a substituent selected from hydroxyl and oxo, most preferably with a hydroxyl group.

In another preferred embodiment R represents C₁₋C₃ alkyl or C₁₋C₃ carboxyl each optionally substituted with one or more hydroxyl groups. Still more preferably R represents a methyl group or a carboxypropyl group, optionally substituted with one or two hydroxyl groups, most preferably it represents methyl.

In still another preferred embodiment n is 1, 2 or 3, more preferably 2 or 3, most preferably n is 3.

Accordingly, in a particularly preferred embodiment of the present invention the one or more flavour modulating substances are selected from the group of ε-N-succinoyl lysine, ε-N-gluconyl lysine, ε-N-lactoyl lysine, ε-N-tartaroyl lysine, δ-N-succinoyl ornithine, δ-N-gluconyl ornithine, δ-N-lactoyl ornithine, δ-N-tartaroyl ornithine, edible salts thereof and edible esters thereof, still more preferably from the group of ε-N-lactoyl lysine, δ-N-lactoyl ornithine, edible salts thereof and edible esters thereof, most preferably from the group of ε-N-lactoyl lysine, edible salts thereof and edible esters thereof.

As used herein the term 'edible esters thereof' encompasses edible derivatives of the present flavour modulating substances and an acid, which can be coupled to the α-hydroxyl group of the flavour modulating substance, or an alkanol, which can be coupled to the carboxylic acid moiety of the flavour modulating substance. Typically, said acid is an organic acid such as a substituted or non-substituted, linear or branched C₁-C₆ carboxylic acid, more preferably a C₁-C₄ carboxylic acid, most preferably a C₁-C₃ carboxylic acid, or alternatively an inorganic acid such as phosphoric acid. Typically, the alkanol may encompass primary, secondary or tertiary alcohols of substituted or non-substituted, linear or branched C₁-C₆ alkanes or alkenes. Such esters may be hydrolysed to produce flavour modulating substances according to the present invention during storage, processing and the like (acting as so called precursors).

According to a particularly preferred embodiment the present flavour modulating substance is selected from the group of substances represented by formula (I) as defined herein before and salts thereof.

As will be apparent from the above formula, some of the compounds used as flavour modulating substances in accordance with this invention exhibit optical isomerism and, depending on the method of preparing said substances and the starting materials, may be isomerically pure or they may be isomeric mixtures. Generally, the compounds will be used as isomeric mixtures, but in some cases the flavour modulating effect may differ between isomers, and therefore one or the other isomer may be preferred.

Throughout this document the term "flavouring substance" encompasses any substance that is not represented by formula (I) and that is capable of imparting a detectable flavour impact, especially at a concentration below 0.1 wt.%, more preferably below 0.01 wt.%. Typically, the present flavouring substance belongs to one or more of the following chemical classes: alcohols, aldehydes, ketones, esters, ethers, acetates, nitriles, terpene hydrocarbons, nitrogenous or sulphurous heterocyclic compounds and essential oils; and said flavouring substances can be of natural or synthetic origin. Many of these are listed in reference texts such as the book by S. Arctander, Perfume and Flavor Chemicals, 1969, Montclair, New Jersey, USA, or its more recent versions, or in other works of a similar nature, as well as in the abundant patent literature in the field of flavours.

Preferably, the flavour composition according to the invention contains, based on the dry weight of said composition, an amount of at least 0.001 wt%, more preferably 0.01 wt.%, most preferably 0.1 wt%, of the present flavour modulating substance as defined herein before. Typically, said amount does not exceed 90 wt.%, preferably it does not exceed 40 wt.%, even more preferably it does not exceed 25 wt%, most preferably said amount does not exceed 5 wt%, based on the total dry weight of the flavour composition.

In a preferred embodiment the flavour composition according to the invention comprises flavouring substances in an amount of at least 0.5 wt.%, preferably at least 1 wt.%, based on the dry weight of the composition. Preferably, the amount of flavouring substances does not exceed 95 wt%, more preferably it does not exceed 50 wt%.

It is furthermore preferred that, in the present flavour composition, the present one or more flavour modulating substances and the other flavouring substances, all as defined herein before, are employed in a weight ratio of less than 50:1, preferably less than 20:1. In a preferred embodiment said weight ratio is within the range of 1:100 to 10:1, more preferably within the range of 1:50 to 5:1. Most preferably, the taste improving substances and flavouring substances are employed in a weight ratio that does not exceed 1:1.

The flavour composition according to the present invention may suitably be prepared in the form of a liquid, a paste or a powder. In a particularly preferred embodiment the flavour composition is a free flowing powder. Typically the present flavour composition comprises at least one flavour carrier, i.e. a material which does not significantly alter the organoleptic properties of the composition. Said carrier may be liquid or solid. Suitable examples include maltodextrin, modified starch and gum arabic.

In a particularly preferred embodiment the present flavour composition is a savoury flavouring comprising a flavour modulating substance, as defined herein before, and a flavouring substance of the meaty, poultry, fishy, yeasty, vegetable, cheese and/or dairy type.

Another aspect of the present invention relates to the use for improving the flavour of foodstuffs, beverages, pharmaceutics, tobacco products or oral care products of a flavour modulating substance as defined herein before. In a particularly preferred embodiment the present invention relates to the use of a flavour modulating substance as defined herein before for imparting and/or modulating savoury and/or salty flavour impact in the aforementioned products.

A further aspect of the present invention relates to a process of improving the flavour of a product selected from the group consisting of foodstuffs, beverages, pharmaceutics, tobacco products and oral care products, said process comprising adding to said product an amount of at least 0.001 ppm of one or more the present flavour modulating substances as defined herein before. According to a preferred embodiment said one or more flavour modulating substances are added in a total amount of 0.001-20,000 ppm, more preferably, 0.01-10,000 ppm, most preferably 0.1-5000 ppm. The precise level in which the present substances are incorporated depends on the nature of the flavour modulating substance(s) and the nature of the product, as will be clear to the skilled person.

Yet another aspect of the present invention relates to a product selected from the group consisting of foodstuffs, beverages, pharmaceutics, tobacco products and oral care products, said product comprising an amount of between 0.001 and 20,000 ppm (mg/kg) of one or more of the present flavour modulating substances. More preferably, the product contains at least 0.01 ppm, still more preferably at least 0.1 ppm, most preferably at least 1 ppm of the one or more of said taste improving substances. Preferably said amount does not exceed 10,000 ppm, more preferably it does not exceed 5,000 ppm, still more preferably it does not exceed 2000 ppm. The present products may further comprise one or more other flavouring substances, typically in amounts of 5-20,000 ppm, more preferably 10-10,000 ppm.

Typical examples of foodstuffs according to the present invention include yoghurt, ice cream, desserts, confectioneries, bakery products, sweet snacks, seasonings, sauces, stocks, soups, dressings and ready meals. The benefits of the present invention may also be realised in beverages, in oral care products such as toothpaste and mouthwash, in pharmaceutics such as pills and elixirs and in tobacco products, which includes any type of tobacco product for smoking as well as for non-smoking applications. It is noted that tobacco-like products are available for both smoking and non-smoking applications. The use of the present taste improving substances in these tobacco substitutes is also encompassed by the present invention.

According to a particularly preferred embodiment of the invention the present product is a foodstuff, more preferably a savoury foodstuff, i.e. a foodstuff of the meaty, poultry, fishy, yeasty, vegetable, cheese or dairy flavour type, most preferably said foodstuff is selected from the group of soups, stocks, sauces, dressings, snacks and ready meals.

Substances according to formula (I) are suitably produced by reacting an α-hydroxycarboxylic acid represented by the following formula (II) and/or edible salts and/or esters thereof and an amine represented by the following formula (III) and/or edible salts and/or esters thereof: 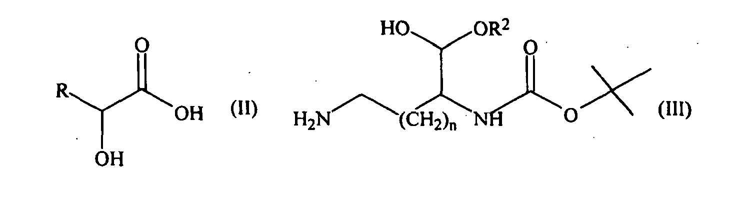 wherein R and n have the same meaning as defined herein before with regard to formula (I) and R² represents a branched or unbranched substituted or unsubstituted C₁-C₅ alkyl group. The obtained protected reaction product is subsequently deprotected to yield the desired substance according to formula (I). Amines represented by formula (III), e.g. N-α-Boc-L-lysine methyl ester, N-α-Boc-ornithine t-butyl ester, N-α-Boc-L-diaminopropionic acid t-butyl ester (Boc-Dap-OtBu) and N-α-Boc-L-2,4-diaminobutyric acid t-butyl ester (Boc-Dab-OtBu), are commercially available products. It will however be clear to the skilled person how to prepare said substances starting with the unprotected amine. Furthermore, other types of protecting groups can be coupled to the α-amino group of the amine, as, again, will be clear to the skilled person.

Thus, another aspect of the invention relates to the process of producing a flavour modulating substance as defined herein before, comprising reacting an α-hydroxycarboxylic acid represented by formula (II) and/or edible salts and/or esters thereof and a diamine represented by formula (III) and/or edible salts and/or esters thereof. Preferably, in said process the α-hydroxycarboxylic acid is selected from the group of lactic acid, malic acid, tartaric acid, citric acid, succinic acid or an aldonic acid such as allonic acid, altronic acid, gluconic acid, mannonic acid, gulonic acid, idonic acid, galactonic acid and talonic acid. The amine represented by formula (III) is preferably selected from protected 2,3 diaminopropionic acid, protected 2,4-diaminobutyric acid, protected ornithine and protected lysine, more preferably protected ornithine and protected lysine. Said reaction is performed by heating to reflux said reactants in an organic solvent, such as toluene, hexane or benzylalcohol, for a period of between 0.1-10 hours. Deprotection of the obtained product can suitably be achieved by acid hydrolysis, e.g. with HCl, yielding the flavour modulating substance represented by formula (I). The reaction product is isolated by evaporating the solvent and optionally further purified using any of the techniques known by the skilled person, such as chromatography and crystallization.

Another aspect of the invention concerns, as such, the flavour modulating substances selected from the group of ε-N-succinoyl lysine, ε-N-gluconyl lysine, ε-N-lactoyl lysine, ε-N-tartaroyl lysine, δ-N-succinoyl ornithine, δ-N-gluconyl ornithine, δ-N-lactoyl ornithine δ-N-tartaroyl ornithine edible salts thereof and/or edible esters thereof.

Yet, another aspect of the invention relates to compositions comprising at least 0.001 ppm preferably 0.01 ppm, more preferably 0.1 ppm of one or more flavour modulating substances selected from the group of ε-N-succinoyl lysine, ε-N-gluconyl lysine ε-N-lactoyl lysine, ε-N-tartaroyl lysine δ-N-succinoyl ornithine, δ-N-gluconyl ornithine, δ-N-lactoyl ornithine δ-N-tartaroyl ornithine, edible salts thereof and/or edible esters thereof.

The invention is further illustrated by means of the following examples.

### Examples

### Example 1

In a 200 ml conical flask equipped with a thermometer and a nitrogen supply, lactic acid (1.73 g / 0.019 mol), benzotriazole-1-yl-oxy-trispyrrolidinophosphonium hexafluorophosphate (PyBOP, 9.6 g / 0.019 mol) and N-α-Boc-L-lysine methyl ester (5.0 g / 0.019 mol, exBachem^{tm}) were dissolved in dichloromethane (50 ml). The mixture was cooled in an ice bath to 0°C. Slowly ethyl di-isopropylamine (3.99 g / 0.031 mol) was added. An exothermic reaction took place and the temperature increased to 7°C. After all amine was added the temperature dropped quickly to 2°C again. The mixture was allowed to warm to room temperature slowly. Stirring was continued over night. TLC-analysis (eluent hexane/ethylacetate 30:70) showed that all lysine was converted. 2.5 grams of protected lactoyl-lysine was purified by column chromatography using first hexane/ethyl acetate 35/65 and subsequently methanol as the eluent. The product was recovered in the methanol solution. Methanol was removed *in vacuo.* Concentrated hydrochloric acid was added to the crude sample, a vigorous reaction took place and colour of the sample changed. After one hour of stirring at room temperature the hydrochloric acid was removed *in vacuo.* The sample is desalted with ion-exchange resin, evaporated to dryness again and analyzed by IR and NMR. Using preparative HPLC a sample was further purified. NMR analysis showed that the sample was ε-lactoyl lysine of high purity.

### Example2

### Three solutions were prepared:

| | |
|---|---|
| A. | a solution of 0.3% NaCl and 0.03% MSG. |
| B. | a solution of 0.3% NaCl, 0.03% MSG and 0.1 % α-lac-lys. |
| C. | a solution of 0.3% NaCl, 0.03% MSG and 0.1 % ε-lac-lys, as prepared in example 1. |

The samples were tasted by a professional panel. There was general agreement among the group on the taste descriptions:

| | |
|---|---|
| Solution A : | salty, umami. |
| Solution B : | salty, umami, bouillon-like. |
| Solution C : | salty, sweet, bouillon-like, complex. |

The panel agreed that the sample containing ε-lac-lys tasted much better than the other two samples.

## Claims

1. Flavour composition comprising, based on the dry weight of the composition, at least 0.001 wt% of one or more flavour modulating substance selected from the group of substances represented by the following formula (I), edible salts thereof and edible esters thereof: 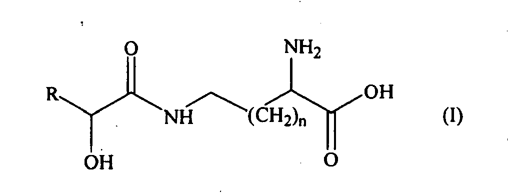 wherein R represents C₁-C₆ alkyl , wherein R is unsubtituted or substituted with one or more substituents selected from hydroxyl, oxo and C₁₋C₃ carboxyl, and wherein n is 0, 1, 2 or 3; and at least 0.1 wt% of one or more flavouring substances.

2. Flavour composition according to claim 1, wherein R represents butyl wherein each carbon atom is substituted with a hydroxyl group.

3. Flavour composition according to claim 1 or 2, wherein R represents a methyl group or a carboxypropyl group, optionally substituted with one or two hydroxyl groups.

4. Flavour composition according to claim any one of the preceding claims, wherein n is 2 or 3.

5. Flavour composition according to claim 1 wherein said flavour modulating substance selected from the group of ε-N-succinoyl lysine, ε-N-gluconyl lysine, ε-N-lactoyl lysine, ε-N-tartaroyl lysine, δ-N-succinoyl ornithine, δ-N-gluconyl ornithine, δ-N-lactoyl ornithine, δ-N-tartaroyl ornithine, edible salts thereof and/or edible esters thereof.

6. Flavour composition according to any one of the preceding claims , comprising the one or more flavour modulating substances in an amount of between 0.01-40 wt%.

7. Use of a flavour modulating susbstances defined in any one of claims 15 for improving the flavour of a product selected from foodstuffs, beverages, pharmaceutics, tobacco products and oral care products.

8. Process of improving the flavour of a product or the taste of a product selected from foodstuffs, beverages, pharmaceutics, tobacco products and oral care products, said process comprising adding to said product one or more of the flavour modulating substances defined in any one of claims 1-5 in an amount of at least 0.001 ppm.

9. Process according to claim 9 wherein said amount ranges from 0.01-10,000 ppm

10. Product selected from foodstuffs, beverages, pharmaceutics, tobacco products and oral care products, said product comprising one or more flavour modulating substances as defined in any one of claims 1-5 in an amount of at least 0.001 ppm.

11. Product according to claim 11, wherein said amount ranges from 0.01-10,000 ppm.

12. Product according to claim 11 or 12, said product being a foodstuff selected from the group of soups, sauces, dressings, snacks and ready meals.

13. Flavour modulating substance selected from the group of ε-N-succinoyl lysine, ε-N-gluconyl lysine, ε-N-lactoyl lysine, ε-N-tartaroyl lysine, δ-N-succinoyl ornithine, δ-N-gluconyl ornithine, δ-N-lactoyl ornithine, δ-N-tartaroyl ornithine, edible salts thereof and/or edible esters thereof.

14. Composition comprising at least 0.001 ppm of one or more of the flavour modulating substances of claim 13.

## Patentansprüche

1. Aromazusammensetzung, umfassend, bezogen auf das Trockengewicht der Zusammensetzung, wenigstens 0,001 Gew.-% an einem oder mehreren aromamodulierenden Stoffen, ausgewählt aus der Gruppe von Stoffen der nachstehenden Formel (I), essbaren Salzen davon und essbaren Estern davon: 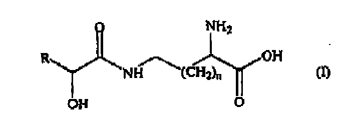 wobei R C₁-C₆-Alkyl darstellt, wobei R unsubstituiert oder mit einem oder mehreren Substituenten substituiert ist, ausgewählt aus Hydroxy, Oxo und C₁-C₃-Carboxy, und wobei n gleich 0, 1, 2 oder 3 ist; und wenigstens 0,1 Gew.-% an einem oder mehreren Aromastoffen.

2. Aromazusammensetzung gemäß Anspruch 1, wobei R Butyl darstellt, wobei jedes Kohlenstoffatom mit einer Hydroxygruppe substituiert ist.

3. Aromazusammensetzung gemäß Anspruch 1 oder 2, wobei R eine Methylgruppe oder eine Carboxypropylgruppe darstellt, gegebenenfalls substituiert mit einer oder zwei Hydroxygruppen.

4. Aromazusammensetzung gemäß einem der vorstehenden Ansprüche, wobei n gleich 2 oder 3 ist.

5. Aromazusammensetzung gemäß Anspruch 1, wobei der aromamodulierende Stoff ausgewählt ist aus der Gruppe von ε-N-Succinoyllysin, ε-N-Gluconyllysin, ε-N-Lactoyllysin, ε-N-Tartaroyllysin, δ-N-Succinoylornithin, δ-N-Gluconylornithin, δ-N-Lactoylornithin, δ-N-Tartaroylornithin, essbaren Salzen davon und/oder essbaren Estern davon.

6. Aromazusammensetzung gemäß einem der vorstehenden Ansprüche, umfassend den einen oder die mehreren aromamodulierenden Stoffe in einer Menge zwischen 0,01 und 40 Gew.-%.

7. Verwendung eines in einem der Ansprüche 1-5 definierten aromamodulierenden Stoffs zum Verbessern des Aromas eines Produkts, ausgewählt aus Nahrungsmitteln, Getränken, Pharmazeutika, Tabakprodukten und Mundpflegeprodukten.

8. Verfahren zum Verbessern des Aromas eines Produkts oder des Geschmacks eines Produkts, ausgewählt aus Nahrungsmitteln, Getränken, Pharmazeutika, Tabakprodukten und Mundpflegeprodukten, wobei das Verfahren das Zusetzen von einem oder mehreren der in einem der Ansprüche 1-5 definierten aromamodulierenden Stoffe in einer Menge von wenigstens 0,001 ppm zu dem Produkt umfasst.

9. Verfahren gemäß Anspruch 9, wobei die Menge im Bereich von 0,01 bis 10.000 ppm liegt.

10. Produkt, ausgewählt aus Nahrungsmitteln, Getränken, Pharmazeutika, Tabakprodukten und Mundpflegeprodukten, wobei das Produkt einen oder mehrere in einem der Ansprüche 1-5 definierte aromamodulierende Stoffe in einer Menge von wenigstens 0,001 ppm umfasst.

11. Produkt gemäß Anspruch 11, wobei die Menge im Bereich von 0,01 bis 10.000 ppm liegt.

12. Produkt gemäß Anspruch 11 oder 12, wobei das Produkt ein Nahrungsmittel ist, ausgewählt aus der Gruppe von Suppen, Saucen, Dressings, Snacks und Fertigmahlzeiten.

13. Aromamodulierender Stoff, ausgewählt aus der Gruppe von ε-N-Succinoyllysin, ε-N-Gluconyllysin, ε-N-Lactoyllysin, ε-N-Tartaroyllysin, δ-N-Succinoylornithin, δ-N-Gluconylornithin, δ-N-Lactoylornithin, δ-N-Tartaroylornithin, essbaren Salzen davon und/oder essbaren Estern davon.

14. Zusammensetzung, umfassend wenigstens 0,001 ppm von einem oder mehreren der aromamodulierenden Stoffe gemäß Anspruch 13.

## Revendications

1. Composition aromatisante comprenant, sur la base du poids sec de la composition, au moins 0,001 % en poids d'une ou plusieurs substances modulatrices d'arôme choisies dans le groupe représenté par la formule (I) suivante, des sels comestibles de celles-ci et des esters comestibles de celles-ci : 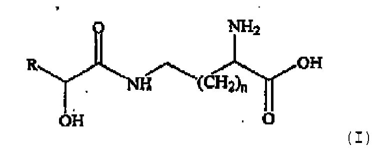 où R représente un alkyle en C₁-C₆
où R est non substitué ou substitué par un ou plusieurs substituants choisis parmi un hydroxyle, un oxo et un carboxyle en C₁-C₃, et où n est 0, 1, 2 ou 3 ; et au moins 0,1 % en poids d'une ou plusieurs substances aromatisantes.

2. Composition aromatisante selon la revendication 1, **caractérisée en ce que** R représente un butyle où chaque atome de carbone est substitué par un groupe hydroxyle.

3. Composition aromatisante selon la revendication 1 ou 2, **caractérisée en ce que** R représente un groupe méthyle ou un groupe carboxypropyle, facultativement substitué par un ou deux groupes hydroxyle.

4. Composition aromatisante selon l'une quelconque des revendications précédentes, où n est 2 ou 3.

5. Composition aromatisante selon la revendication 1 **caractérisée en ce que** ladite substance modulatrice d'arôme est choisie dans le groupe constitué de la ε-N-succinoyl-lysine, la ε-N-gluconyl-lysine, la ε-N-lactoyl-lysine, la ε-N-tartroyl-lysine, la δ-N-succinoyl-ornithine, la δ-N-gluconyl-ornithine, la δ-N-lactoyl-ornithine, la δ-N-tartroyl-ornithine, des sels comestibles de celles-ci et/ou des esters comestibles de celles-ci.

6. Composition aromatisante selon l'une quelconque des revendications précédentes, comprenant les une ou plusieurs substances modulatrices d'arôme en une quantité comprise entre 0,01 et 40 % en poids.

7. Utilisation d'une substance modulatrice d'arôme définie dans l'une quelconque des revendications 1 à 5 pour améliorer l'arôme d'un produit choisi parmi des denrées alimentaires, des boissons, des produits pharmaceutiques, des produits du tabac et des produits de soins buccaux.

8. Procédé d'amélioration de l'arôme ou du goût d'un produit choisi parmi des denrées alimentaires, des boissons, des produits pharmaceutiques, des produits du tabac et des produits de soins buccaux, ledit procédé comprenant l'ajout audit produit d'une ou plusieurs des substances modulatrices d'arôme définies dans l'une quelconque des revendications 1 à 5 en une quantité d'au moins 0,001 ppm.

9. Procédé selon la revendication 9 **caractérisé en ce que** ladite quantité est dans la plage de 0,01 à 10 000 ppm.

10. Produit choisi parmi des denrées alimentaires, des boissons, des produits pharmaceutiques, des produits du tabac et des produits de soins buccaux, ledit produit comprenant une ou plusieurs substances modulatrices d'arôme comme défini dans l'une quelconque des revendications 1 à 5 en une quantité d'au moins 0,001 ppm.

11. Produit selon la revendication 11, **caractérisé en ce que** ladite quantité est dans la plage de 0,01 à 10 000 ppm.

12. Produit selon la revendication 11 ou 12, ledit produit étant une denrée alimentaire choisie dans le groupe de soupes, sauces, assaisonnements, en-cas et plats préparés.

13. Substance modulatrice d'arôme choisie dans le groupe de la ε-N-succinoyl-lysine, la ε-N-gluconyl-lysine, la ε-N-lactoyl-lysine, la ε-N-tartroyl-lysine, la δ-N-succinoyl-ornithine, la δ-N-gluconyl-ornithine, la δ-N-lactoyl-ornithine, la δ-N-tartroyl-ornithine, des sels comestibles de celle-ci et/ou des esters comestibles de celle-ci.

14. Composition comprenant au moins 0,001 ppm d'une
ou plusieurs des substances modulatrices d'arôme de la revendication 13.
